# EUROPEAN PATENT SPECIFICATION

(11) **EP 2 905 749 B1**
(45) Date of publication and mention of the grant of the patent: **22.09.2021**
(21) Application number: 14464002.6
(22) Date of filing: 10.02.2014
(51) Int. Cl.: G07C 5/00, G07B 15/06

(54) **Communication method for a tolling system comprising a server and at least one on-board-unit**
Kommunikationsverfahren für ein Mautsystem mit einem Server und mindestens einer Bordeinheit
Procédé de communication pour un système de péage comprenant un serveur et au moins une unité embarquée

(43) Date of publication of application: 12.08.2015
(73) Proprietor: Continental Automotive GmbH, 30165 Hannover (DE)
(72) Inventor: Cimpean, Calin, 300708 Timisoara (RO); Aldea-Ungurean, Doru, 307285 Mosnita Noua (RO)
(74) Representative: Continental Corporation

(56) References cited:
- US-A1- 2003 109 223
- US-A1- 2007 076 652
- US-B1- 6 647 270

## Description

### Field of the invention

The invention relates to the field of automotive applications. In particular, the invention relates to a communication method for a tolling system, a corresponding on-board-unit and a corresponding tolling system comprising the on-board-unit.

### Background

US 2013/0096993 A1 describes a method of tolling vehicles in an open-road toll system with vehicle-based on-board units and roadside radio beacons. The described method includes transmitting transaction information and a factor from the on-board unit; updating the factor as a function of the transmitted transaction information and calculating a debit amount as a function of the updated factor; transmitting a debit request with the calculated debit amount and the updated factor to the on-board unit; and debiting the received debit amount to a toll credit account in the on-board unit and writing a new transaction information concerning this new debit transaction and the received updated factor into the on-board unit.

US 2007/0076652 A1 discloses an on-vehicle information terminal that conducts communication with a roadside communication device located on the road. US 6,647,270 B1 discloses a system for providing a communication link among the plurality of mobile units. US 2003/0109223 A1 discloses an electronic toll collection system comprising an on-vehicle unit mounted on a vehicle and a stationary-station communication system.

### Summary of the invention

It is an object of the invention to provide an improved tolling system.

This object is solved by the features of the independent claims. Developments of the invention are stated in the dependent claims and the following description.

The basic idea of the present invention is given by using a thin client solution and using a communication between the server and the on-board-unit, OBU, wherein the communication is bi-directional, that means that either one of this two devices can issue a message.

In order to design a proper protocol for tolling requirements a communication concept and a security concept is used.

The present invention advantageously provides a protocol that describes the information exchange between the OBU and the communication server based on TCP/IP transport protocol. The main advantage of the TCP is that assures the delivery of the transmitted data, and the sender can assume that the data was delivered.

Whenever a response message should be returned, the sender shall flag a pending state until the arriving of the answer for the previous request. If the pending state times out, the sender can retry or abort the request. However, no assumption on the result of the request or of the command can be taken. The number of retries and the threshold to abort the request is up to the application developer.

No message is sent before the arriving of previous messages acknowledge. Otherwise an acknowledge crossover could happen, leading to an uncertainty about the confirmation or not of a message.

The present invention further provides an advanced security concept. A secure mechanism for data transfer between OBU and Server is provided.

Basically three topics are fulfilled in order to provide a secure mechanism: integrity, privacy, and authenticity.

According to the invention, the step of predefining the message communication protocol comprises flagging a pending state until an answer for a previous request is received. This advantageously allows a secure and fail-save mode of communication.

According to the invention, the step of predefining the message communication protocol comprises sending no message before a receiving of a receipt acknowledge of a previous message. This advantageously provides an improved reliability of the entire system.

According to an exemplary embodiment of the invention, the messages are transmitted via a general packet radio service or any other packet oriented mobile data service of a digital cellular networks system used by mobile phones. This advantageously allows using already present and established networks system.

According to an exemplary embodiment of the invention, the step of initializing the message format comprises using the fixed length part to define the common information for all data exchange.

According to an exemplary embodiment of the invention, the step of initializing the message format comprises using the variable length part to transmit data, commands and request groups. According to an exemplary embodiment of the invention, as the predefined set of messages a firmware download, a message flow over TCP Transport Protocol, an acknowledge lost response, a response/ACK duplication, a protocol Initialization, or a GNSS fix lost protocol is used.

According to an exemplary embodiment of the invention, as the at least one status table a basic structure of data fields is used.

According to an exemplary embodiment of the invention, as the at least one status table an advanced structure of data fields is used.

A computer-readable medium may be a floppy disk, a hard disk, a CD, a DVD, an USB (Universal Serial Bus) storage device, a RAM (Random Access Memory), a ROM (Read Only Memory) and an EPROM (Erasable Programmable Read Only Memory). A computer-readable medium may also be a data communication network, for example the Internet, which allows downloading a program code.

These and other aspects of the present invention will become apparent from and elucidated with reference to the embodiments described hereinafter.

Exemplary embodiments of the present invention will now be described in the following, with reference to the following drawings.

### Brief description of the drawings

- Fig. 1: shows a schematic diagram of a tolling system comprising a server and three on-board-units according to an exemplary embodiment;

- Fig. 2: shows a schematic flow-chart diagram of a communication method for a tolling system according to an exemplary embodiment;

- Fig. 3: shows a schematic chart diagram of CRC computation according to an exemplary embodiment;

- Fig. 4: shows a schematic chart diagram of an encryption according to an exemplary embodiment;

- Fig. 5: shows a schematic chart diagram of an authentication concept according to an exemplary embodiment;
- Fig. 6: shows a schematic flow-chart diagram of a protocol initialization according to an exemplary embodiment;

- Fig. 7: shows a schematic flow-chart diagram of a firmware download protocol according to an exemplary embodiment; and
- Fig. 8: shows a schematic flow-chart diagram of a general format of the advanced status table according to an exemplary embodiment.

### Detailed description of embodiments

The illustration in the accompanying drawings is schematically. In different drawings, similar or identical elements or steps are provided with the same reference numerals.

The following detailed description is merely exemplary in nature and is not intended to limit application and uses.

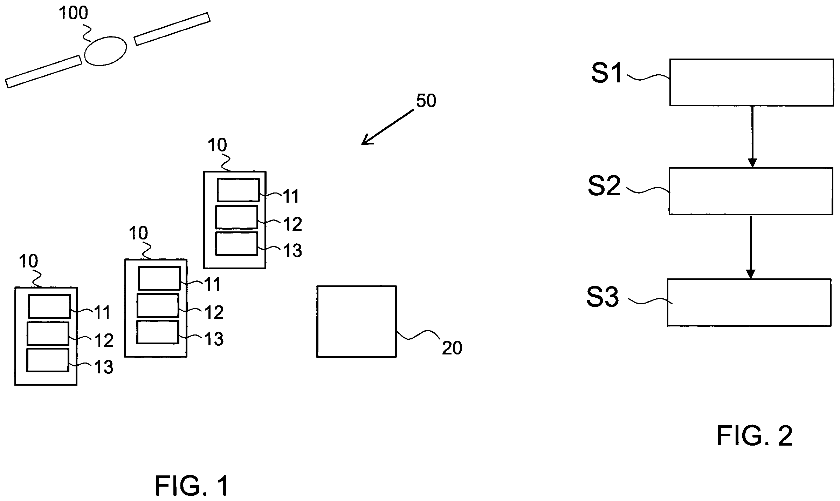

Figure 1 shows a schematic diagram of a tolling system comprising a server and three on-board-units according to an exemplary embodiment.

A tolling system 50 may comprise a server 20 and at least one on-board-unit 10; three on-board-units 10 are depicted in Figure 1 and are located in different vehicles.

Each of the on-board-units comprises a predefining module 11, an initializing module 12, and an assigning module 13.

The predefining module 11 may be adapted to predefine a message flow communication protocol comprising a predefined set of messages.

The initializing module 12 can be adapted to initialize a message format for each of the messages, the message format comprising a fixed length part and a variable length part with at least one status table.

The assigning module 13 may be adapted to assign a multilevel security using at least two security levels attached to the messages and granted to the server and/or the on-board-unit.

The on-board-unit 10 may be configured to receive navigational signals from a navigation satellite 100. The navigation satellite 100 may be assigned to a satellite navigation system or any other system of satellites that provide autonomous geo-spatial positioning with global coverage.

The on-board-unit 10 may be configured to determine their location (longitude, latitude, and altitude) to high precision (within a few meters) using time signals transmitted along a line of sight by radio from satellites. The signals also allow the electronic receivers to calculate the current local time to high precision, which allows time synchronization.

According to the present invention, the status table is a message that carries the information generated or acquired from the OBU to the Server.

It will be sent: as a response for a request from the SERVER; when some event occurs; periodically for tracking purposes. Basically, there are two possible approaches for this message:
- a fix table that is sent always in the same format no matter of the required information;
- a configurable table from a pre-defined list of parameters that can be reconfigured to match the required information at that point.

The first option refers to a basic structure in form of a basic status table. The second one is referred to as advanced status table, e.g. a status table with a advanced data structure.

The advanced status table has the following characteristics: Field length and identification codes. This basically provides two advantages:
If the application is not prepared to deal with the field code,
it can disregard it and pass to the next field, without having to treat the unknown code.

The adding and creation of new fields is easier. Variable length of information fields Information fields may be included based on the occurrence of an event.

Figure 2 shows a schematic flow-chart diagram of a communication method for a tolling system according to an exemplary embodiment.

A communication method for a tolling system comprising a server and at least one on-board-unit, the method comprising the following steps:
As a first step of the method, predefining S1 a message communication protocol comprising a predefined set of messages to be transmitted between the server and the on-board-unit is performed.

As a second step of the method, initializing S2 a message format for each of the messages, the message format comprising a fixed length part and a variable length part with at least one status table is conducted.

As a third step of the method, assigning S3 a multilevel security using at least two security levels attached to the messages and granted to the server and/or the on-board-unit is conducted.

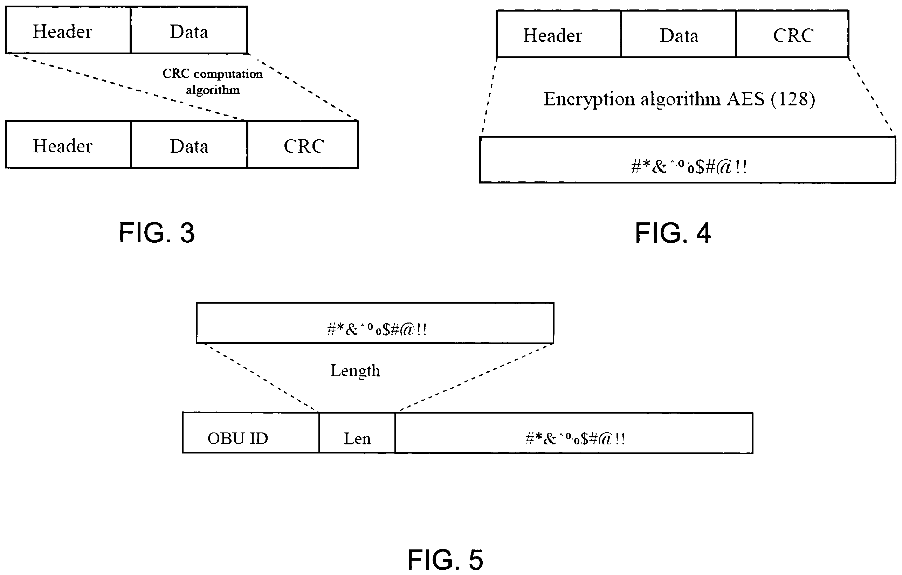

Figure 3 shows a schematic chart diagram of CRC computation according to an exemplary embodiment.

Because the communication protocol is a protocol designed for tolling purposes and deals indirectly with money the communication between OBU and Server needs to be secured. For this reason we need to provide a secure mechanism for data transfer between OBU and Server.

Basically there are three topics that need to be fulfilled, in order to provide a secure mechanism: integrity, privacy, and authenticity.

Integrity will be ensured by computing a CRC over the Message or the Command and add the resulted 2 bytes at the end of the message/command, as shown in Figure 3.

A cyclic redundancy check (CRC) is an error-detecting code commonly used in digital networks and storage devices to detect accidental changes to raw data. Blocks of data entering these systems get a short check value attached, based on the remainder of a polynomial division of their contents; on retrieval the calculation is repeated, and corrective action can be taken against presumed data corruption if the check values do not match.

CRCs are so called because the check (data verification) value is a redundancy (it adds no information to the message) and the algorithm is based on cyclic codes. CRCs are simple to implement in binary hardware, easy to analyze mathematically, and particularly good at detecting common errors caused by noise in transmission channels.

Because the check value has a fixed length, the function that generates it is occasionally used as a hash function. CRC is a reliable algorithm that has proved its effectiveness over the time.

A CRC- 16 is implemented as the particularity of this algorithm is that it will use a 17 bits polynomial length and the result will be on 2 bytes.

Figure 4 shows a schematic chart diagram of an encryption according to an exemplary embodiment of the present invention.

The privacy will be ensured by encrypting the new resulted frame (header + data + CRC).

In cryptography, encryption is the process of encoding messages (or information) in such a way that eavesdroppers or hackers cannot read it, but that authorized parties can. In an encryption scheme, the message or information (referred to as plaintext) is encrypted using an encryption algorithm, turning it into an unreadable cipher text (ibid.). This is usually done with the use of an encryption key, which specifies how the message is to be encoded.

Any adversary that can see the cipher text should not be able to determine anything about the original message. An authorized party, however, is able to decode the cipher text using a decryption algorithm that usually requires a secret decryption key that adversaries do not have access to. For technical reasons, an encryption scheme usually needs a key-generation algorithm, to generate keys.

Figure 5 shows a schematic chart diagram of an authentication concept according to an exemplary embodiment.

Since a private-key encryption is used a mechanism for the key to be known to Server and OBU is needed, in other words a mechanism for the OBU to authenticate itself on the Server is needed. For this reason, a frame as shown in Figure 5 is used.

After the encryption, the size of the encrypted part is known, so it is possible to construct the message frame. The message may have the following format, as depicted in Figure 5:
- OBU_ID (13 bytes);
- encrypted message length (2 bytes);
- encrypted message

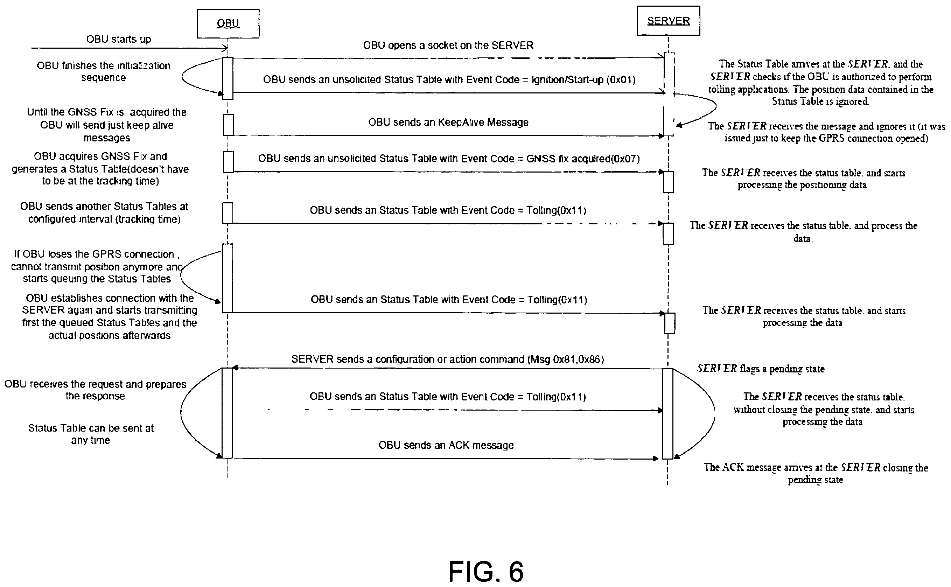

Figure 6 shows a schematic flow-chart diagram of a protocol initialization according to an exemplary embodiment.

At startup, after the socket is opened on the Server the OBU will send a Status Table to signal to the Server that the OBU is functional. Until the OBU will acquire the GNSS fix it will send only Keep Alive messages to the Server, if it doesn' t have another command in-between. When the OBU will be able to obtain the GNSS fix it will issue another status table to the Server to signal the new state. After this Status Table will be send by the OBU to the Server at tracking time interval and the positioning data will be taken into account on Server side.

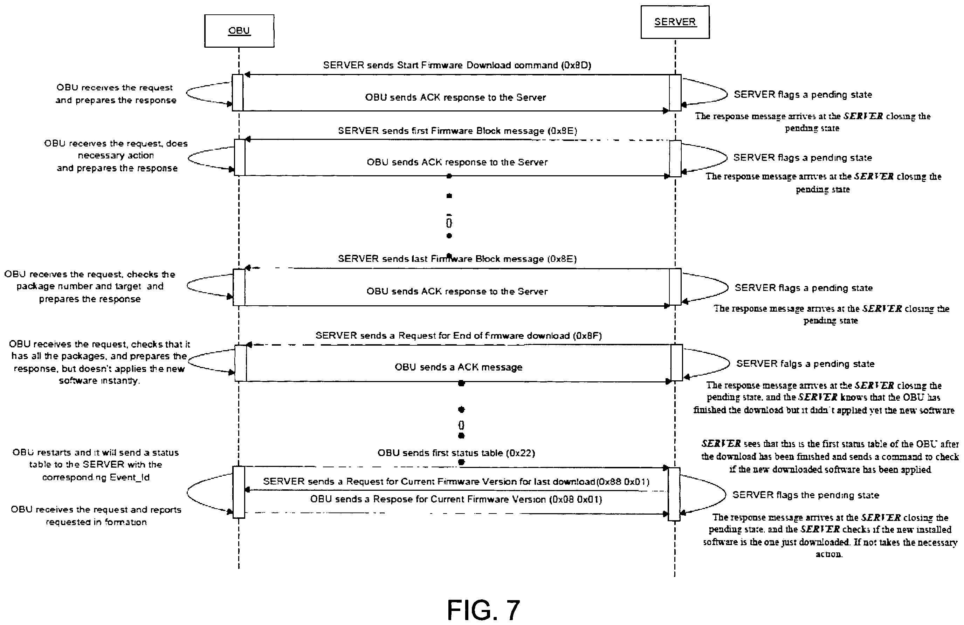

Figure 7 shows a schematic flow-chart diagram of a firmware download protocol according to an exemplary embodiment.

After a firmware download is finished the OBU will not apply the new software instantly, it will apply it at the next start-up therefore the Server, after the first status table will be generated by the OBU will have to send a 0x88 command to check if the new software has been applied or not.

According to a further not shown embodiment, a further predefined message communication protocol may be constructed as follows:
In normal functioning mode of the OBU (GNSS Fix acquired and GPRS connection established) it is possible that the OBU can lose the GNSS Fix but still to have the GPRS connection available. In this case we have 2 scenarios possible:
1) If the Status Table is configured to send just the positioning data the OBU will stop transmitting status tables until it will be able to obtain again the GNSS Fix or its status table it will be reconfigured to send some additional information.
2) If the Status Table has additional data configured to be send, except the positioning data, the OBU will continue to transmit the Status Table but the positioning data will be filled with a default value that is recognized by Server as invalid.

According to a further not shown embodiment, a further predefined message communication protocol may be constructed as follows:
For a firmware download, if a firmware download is in progress the status table can be received at any time by the server without any interference with the actual download process. Also any other command/s is/are allowed between 2 blocks transmission, however the Server should not send another Firmware Download command until the ACK arrives.

According to a further not shown embodiment, a further predefined message communication protocol may be constructed as follows:
For a firmware download, if the End Block message is lost, the OBU will not know if it can use the downloaded firmware. And if the ACK is not received by the Server, it cannot know if the new code will be used. For this reason, the End/ACK shall be completed.

According to a further not shown embodiment, a further predefined message communication protocol may be constructed as follows:
From the server's point of view, the loss of the response packet has the same effect as the loss of the request. So we are showing only the loss of the response message. Also, the duplication of the request, from the point of view of the OBU, is the same as receiving two single requests. For this reason, critical requests that could not be executed more than once should have some mechanism to mark for uniqueness (e.g. Reading back the status of the changed configuration).

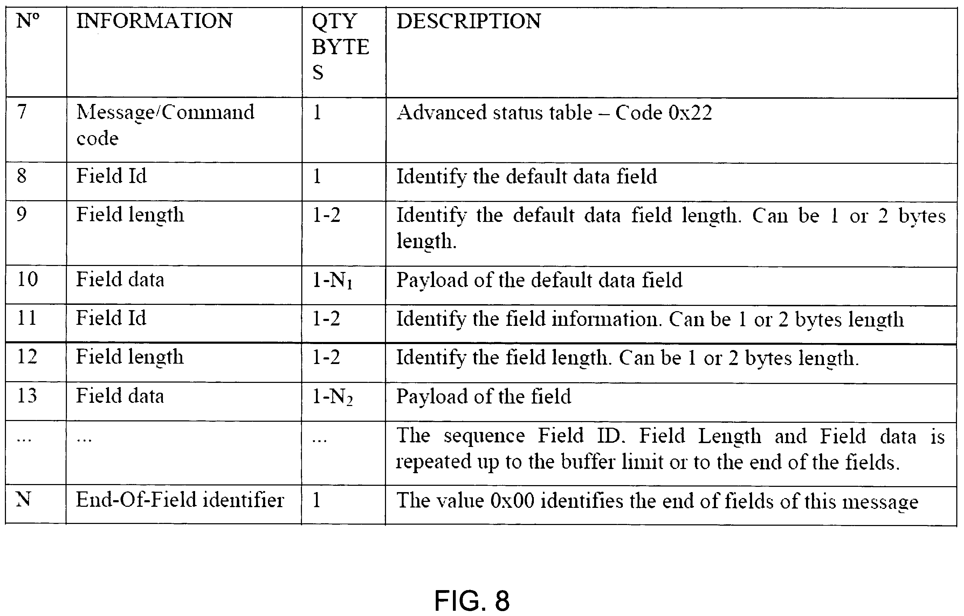

Figure 8 shows a schematic flow-chart diagram of a general format of the advanced status table according to an exemplary embodiment of the present invention. The sequence Field ID, Field Length and Field data is repeated up to the buffer limit or to the end of the fields.

The status table is a structure of fields (bytes) that carries information to the Server.

The most significant bit of the first byte indicates if there is a second byte or not. The most significant bit is discarded and should not be used as part of the field ID.

The data (may be except default status table) will be reported as it is represented in the OBU memory.

It should be noted that the term "comprising" does not rule out a plurality.

## Claims

1. Communication method for a tolling system comprising a server and at least one on-board-unit, the method comprising the steps of:
- predefining (S1) by the on-board-unit a message communication protocol comprising a predefined set of messages to be transmitted between the server and the on-board-unit;
- initializing (S2) by the on-board-unit a message format for each of the
messages, the message format comprising a fixed length part and a variable length part with at least one status table,
wherein the status table carries information generated or acquired from the on-board-unit to the server; and
- assigning (S3) by the on-board-unit a multilevel security using at least two security levels attached to
the messages and granted to the server and/or the on-board-unit,
wherein the step of predefining (S1) the message communication protocol comprises
- flagging a pending state until an answer for a previous request is received, and
- sending no message before receiving of a receipt acknowledge of a previous message.

2. Communication method of the preceding claim, wherein the messages are transmitted via a general packet radio service or any other packet oriented mobile data service of a digital cellular networks system used by mobile phones.

3. Communication method of one of the preceding claims, wherein the step of initializing (S2) the message format comprises using the fixed length part to define the common information for all data exchange.

4. Communication method of one of the preceding claims, wherein the step of initializing (S2) the message format comprises using the variable length part to transmit data, commands and request groups.

5. Communication method of one of the preceding claims, wherein as the predefined set of messages a firmware download, a message flow over TCP Transport Protocol, an acknowledge lost response, a response/ACK duplication, a protocol Initialization, or a GNSS fix lost protocol is used.

6. Communication method of one of the preceding claims, wherein as the at least one status table a basic structure of data fields is used.

7. Communication method of one of the preceding claims, wherein as the at least one status table an advanced structure of data fields is used.

8. Program element, which, when being executed on one or several processors of a driver assistance system, instructs the system to perform the method steps of one of claims 1 to 7.

9. Computer-readable medium, on which a program element according to claim 8 is stored.

10. On-board-unit (10) for a tolling system (50), the on-board-unit comprising:
- predefining module (11) adapted to predefine a message flow communication protocol comprising a predefined set of messages, wherein predefining a message comprises flagging a pending state until an answer for a previous request is received, and sending no message before receiving of a receipt acknowledge of a previous message;
- an initializing module (12) adapted to initialize a message format for each of the messages, the message format comprising a fixed length part and a variable length part with at least one status table, wherein the status table carries information generated or acquired from the on-board-unit (10) to a server; and
- an assigning module (13) adapted to assign a multilevel security using at least two security levels attached to the messages and granted to the server and/or the on-board-unit.

11. Tolling system (50) comprising a server (20) and at least one on-board-unit (10) according to claim 10.

## Patentansprüche

1. Kommunikationsverfahren für ein Mautsystem, das einen Server und mindestens eine Bordeinheit aufweist, wobei das Verfahren die folgenden Schritte aufweist:
- Vordefinieren (S1) durch die Bordeinheit eines Nachrichtenkommunikationsprotokolls, das eine vordefinierte Gruppe von zwischen dem Server und der Bordeinheit zu sendenden Nachrichten aufweist;
- Initialisieren (S2) durch die Bordeinheit eines Nachrichtenformats für jede der Nachrichten, wobei das Nachrichtenformat einen Teil fester Länge und einen Teil variabler Länge mit mindestens einer Zustandstabelle aufweist,
wobei die Zustandstabelle Informationen, die von der Bordeinheit erzeugt oder erfasst werden, an den Server überträgt; und
- Zuweisen (S3) durch die Bordeinheit einer Mehrstufensicherheit unter Verwendung mindestens zweier Sicherheitsniveaus, die den Nachrichten beigefügt und für den Server und/oder die Bordeinheit bewilligt sind, wobei der Schritt des Vordefinierens (S1) des Nachrichtenkommunikationsprotokolls Folgendes aufweist:
- Markieren eines schwebenden Zustands, bis eine Antwort für eine vorherige Anforderung empfangen wird, und
- Senden keiner Nachricht vor dem Empfangen einer Empfangsbestätigung einer vorherigen Nachricht.

2. Kommunikationsverfahren nach dem vorhergehenden Anspruch,
wobei die Nachrichten über einen allgemeinen Paketfunkdienst oder einen anderen paketorientierten Mobildatendienst eines digitalen Mobilnetzsystems, das durch Mobiltelefone verwendet wird, gesendet werden.

3. Kommunikationsverfahren nach einem der vorhergehenden Ansprüche,
wobei der Schritt des Initialisierens (S2) des Nachrichtenformats aufweist, den Teil fester Länge zu verwenden, um die gemeinsamen Informationen für den gesamten Datenaustausch zu definieren.

4. Kommunikationsverfahren nach einem der vorhergehenden Ansprüche,
wobei der Schritt des Initialisierens (S2) des Nachrichtenformats aufweist, den Teil variabler Länge zu verwenden, um Daten, Befehle und Anforderungsgruppen zu senden.

5. Kommunikationsverfahren nach einem der vorhergehenden Ansprüche, wobei als die vordefinierte Gruppe von Nachrichten ein Herunterladen von Firmware, ein Nachrichtenfluss über ein TCP-Transportprotokoll, eine Bestätigungsverlustantwort, eine Antwort/ACK-Duplizierung, eine Protokollinitialisierung oder ein GNSS-Reparaturverlustprotokoll verwendet wird.

6. Kommunikationsverfahren nach einem der vorhergehenden Ansprüche,
wobei als die mindestens eine Zustandstabelle eine Basisstruktur von Datenfeldern verwendet wird.

7. Kommunikationsverfahren nach einem der vorhergehenden Ansprüche,
wobei als die mindestens eine Zustandstabelle eine erweiterte Struktur von Datenfeldern verwendet wird.

8. Programmelement, dass dann, wenn es auf einem oder mehreren Prozessoren eines Fahrassistenzsystems ausgeführt wird, das System anweist, die Verfahrensschritte nach einem der Ansprüche 1 bis 7 auszuführen.

9. Computerlesbares Medium, auf dem ein Programmelement nach Anspruch 8 gespeichert ist.

10. Bordeinheit (10) für ein Mautsystem (50), wobei die Bordeinheit Folgendes aufweist:
- ein Vordefinierungsmodul (11), das ausgelegt ist, ein Nachrichtenflusskommunikationsprotokoll, das eine vordefinierte Gruppe von Nachrichten aufweist, im Voraus zu definieren, wobei das Vordefinieren einer Nachricht aufweist, einen schwebenden Zustand zu markieren, bis eine Antwort für eine vorherige Anforderung empfangen wird, und keine Nachricht zu senden, bevor eine Empfangsbestätigung einer vorherigen Nachricht empfangen wird;
- ein Initialisierungsmodul (12), das ausgelegt ist, ein Nachrichtenformat für jede der Nachrichten zu initialisieren, wobei das Nachrichtenformat einen Teil fester Länge und einen Teil variabler Länge mit mindestens einer Zustandstabelle aufweist, wobei die Zustandstabelle Informationen, die von der Bordeinheit (10) erzeugt oder erfasst werden, an den Server überträgt; und
- ein Zuweisungsmodul (13), das ausgelegt ist, eine Mehrstufensicherheit unter Verwendung mindestens zweier Sicherheitsniveaus, die den Nachrichten beigefügt und dem Server und/oder der Bordeinheit bewilligt sind, zuzuweisen.

11. Mautsystem (50), das einen Server (20) und mindestens eine Bordeinheit (10) nach Anspruch 10 aufweist.

## Revendications

1. Procédé de communication pour un système de péage comprenant un serveur et au moins une unité embarquée, le procédé comprenant les étapes suivantes :
- prédéfinir (S1), par l'unité embarquée, un protocole de communication de messages comprenant un ensemble prédéfini de messages à transmettre entre le serveur et l'unité embarquée ;
- initialiser (S2), par l'unité embarquée, un format de message pour chacun des messages, le format de message comprenant une partie de longueur fixe et une partie de longueur variable avec au moins une table d'état, où la table d'état achemine des informations générées ou acquises à partir de l'unité embarquée vers le serveur ; et
- attribuer (S3), par l'unité embarquée, une sécurité à niveaux multiples utilisant au moins deux niveaux de sécurité attachés aux messages et accordés au serveur et/ou à l'unité embarquée,
où l'étape de prédéfinition (S1) du protocole de communication de messages comprend les étapes suivantes :
- marquer un état en attente jusqu'à ce qu'une réponse à une demande précédente soit reçue, et
- n'envoyer aucun message avant la réception d'un accusé de réception d'un message précédent.

2. Procédé de communication selon la revendication précédente,
dans lequel les messages sont transmis par l'intermédiaire d'un service général de radiocommunication par paquets ou tout autre service de données mobiles orienté paquets d'un système de réseaux cellulaires numériques utilisé par des téléphones mobiles.

3. Procédé de communication selon l'une des revendications précédentes,
dans lequel l'étape d'initialisation (S2) du format de message comprend l'utilisation de la partie de longueur fixe pour définir les informations communes pour tous les échanges de données.

4. Procédé de communication selon l'une des revendications précédentes,
dans lequel l'étape d'initialisation (S2) du format de message comprend l'utilisation de la partie de longueur variable pour transmettre des données, des commandes et des groupes de demandes.

5. Procédé de communication selon l'une des revendications précédentes,
dans lequel est utilisé en tant qu'ensemble prédéfini de messages, un téléchargement de micrologiciel, un flux de messages sur le protocole de transport TCP, une réponse de perte d'accusé de réception, une duplication de réponse/ACK, une initialisation de protocole ou un protocole de perte de position GNSS.

6. Procédé de communication selon l'une des revendications précédentes,
dans lequel est utilisée en tant qu'au moins une table d'état, une structure de base de champs de données.

7. Procédé de communication selon l'une des revendications précédentes,
dans lequel est utilisé en tant qu'au moins un tableau d'état, une structure avancée de champs de données.

8. Élément de programme qui, lorsqu'il est exécuté sur un ou plusieurs processeurs d'un système d'aide à la conduite, donne pour instruction au système d'exécuter les étapes de procédé de l'une des revendications 1 à 7.

9. Support lisible par ordinateur, sur lequel est stocké un élément de programme selon la revendication 8.

10. Unité embarquée (10) pour un système de péage (50), l'unité embarquée comprenant :
- un module de prédéfinition (11) adapté pour prédéfinir un protocole de communication de flux de messages comprenant un ensemble prédéfini de messages, où la prédéfinition d'un message comprend le marquage d'un état en attente jusqu'à ce qu'une réponse à une demande précédente soit reçue, et l'envoi d'aucun message avant la réception d'un accusé de réception d'un message précédent ;
- un module d'initialisation (12) adapté pour initialiser un format de message pour chacun des messages, le format de message comprenant une partie de longueur fixe et une partie de longueur variable avec au moins une table d'état, où la table d'état achemine des informations générées ou acquises à partir de l'unité embarquée (10) vers un serveur ; et
- un module d'attribution (13) adapté pour attribuer une sécurité à niveaux multiples utilisant au moins deux niveaux de sécurité attachés aux messages et accordés au serveur et/ou à l'unité embarquée.

11. Système de péage (50) comprenant un serveur (20) et au moins une unité embarquée (10) selon la revendication 10.
